**Europäisches Patentamt**

(19) **European Patent Office**

**Office européen des brevets**

(11) Veröffentlichungsnummer: **0 032 162**
**B1**

(12) **EUROPÄISCHE PATENTSCHRIFT**

(45) Veröffentlichungstag der Patentschrift:
20.07.83

(51) Int. Cl.³: **F 16 C 7/00**

(21) Anmeldenummer: **80106506.1**

(22) Anmeldetag: **24.10.80**

(54) **Pleuelstange für Kraftmaschinen.**

(30) Priorität: **19.12.79 DE 2951111**

(43) Veröffentlichungstag der Anmeldung:
**22.07.81 Patentblatt 81/29**

(45) Bekanntmachung des Hinweises auf die Patenterteilung:
**20.07.83 Patentblatt 83/29**

(84) Benannte Vertragsstaaten:
**BE FR GB IT SE**

(56) Entgegenhaltungen:
**DE-A-2 360 410**
**DE-B-2 916 847**
**FR-A-1 559 342**
**FR-A-2 191 644**
**GB-A-1 249 916**
**GB-A-1 364 317**

(73) Patentinhaber: **Messerschmitt-Bölkow-Blohm Gesellschaft mit beschränkter Haftung, Postfach 801109, D-8000 München 80 (DE)**

(72) Erfinder: **Brunsch, Klaus, Dipl.Ing., Asternweg 11, D-8190 Weidach (DE)**
Erfinder: **Schindler, Rudolf, Ing.grad., Albrecht-Dürer-Strasse 1, D-8014 Neubiberg (DE)**

Pleuelstange für Kraftmaschinen

Die Erfindung bezieht sich auf eine Pleuelstange für Kraftmaschinen entsprechend den Merkmalen des Oberbegriffs von Anspruch 1.

Eine solche aus der GB-PS Nr. 1364317 bekannte Pleuelstange ist in Mischbauweise ausgeführt. Der Gurt aus faserverstärktem Kunstoff ist in zwei Strängen in ein metallenes Pleuelauge eingelassen und verläuft von dort als alleinige Ausbildung des Pleuelschaftes in zwei halbrunde Ausfräsungen der ebenfalls aus Metall bestehenden Kubelwellenschale. Die Steifigkeit des nur aus den beiden Gurtsträngen bestehenden Pleuelschaftes und die Einleitung der Gurtstränge in die Kurbelwellenschale ist für hohe Beanspruchungen, insbesondere auf Knicken und Biegung, nicht ausreichend. Ausserdem entstehen durch den hohen Metallanteil der Pleuelstange, insbesondere durch die grosse Masse des Kurbelwellenlagers, erhebliche Massenkräfte. Aus der DE-OS Nr. 2360410 ist es bekannt, den Pleuelschaft von Pleuelstangen üblicher Bauart aus glasfaserverstärktem Kunststoff herzustellen. Die Fertigung erfolgt dabei durch Spritzen in einer entsprechenden Form, wobei der Glasfaseranteil von etwa 25 bis 40% unregelmässig eingebettet ist.

Die Aufgabe der Erfindung besteht darin, eine Pleuelstange zu schaffen, die nur aus faserverstärktem Kunstoff mit gerichteten Fasern besteht, keine grossen Materialanhäufungen aufweist und insgesamt eine geringe Masse hat. Diese Aufgabe wird erfindungsgemäss gelöst durch die Merkmale des kennzeichenden Teils des Anspruchs 1. Weiterbildungen der Erfindung sind durch die Unteransprüche 2 bis 6 gegeben.

Es zeigen:

Fig. 1 die Seitenansicht eines Pleuels,

Fig. 2 einen Schnitt durch das Pleuel entsprechend den Linien II-II der Fig. 1 in vergrösserter Darstellung, und

Fig. 3 einen Halbschnitt quer durch die Längsrichtung des Pleuels im Bereich der Schäftung.

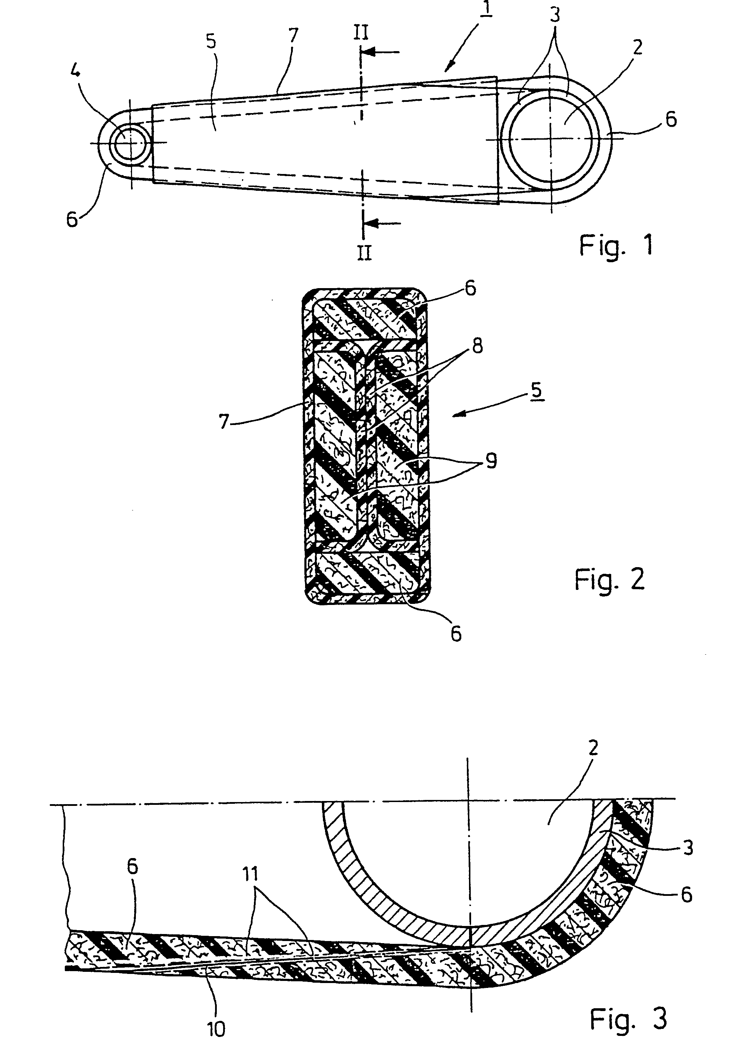

Ein in Ansicht dargestelltes Pleuel 1 entsprechend Fig. 1 weist ein Kurbelwellenlager 2 mit geteilten Lagerschalen 3, ein Pleuelauge 4 und einen Pleuelschaft 5 auf. Das Pleuel wird umschlossen von einem umlaufenden Gurt 6 aus in Gurtrichtung verlaufenden, in eine Kunstharzmatrize eingebetteten, unidirektionalen Fasern. Zwischen dem Kurbelwellenlager 2 und dem Pleuelauge 4 ist der Pleuelschaft 5 mit einem oder mehreren mit Kunstharz getränkten Faserlagern 7 umwickelt.

In der Schnittdarstellung nach Fig. 2 ist der Aufbau des Pleuelschaftes 5 im einzelnen gezeigt. Zwischen den umlaufenden Gurten 6 sind zwei U-förmige Stege 8 eingesetzt, zwischen denen ein zweiteiliger Kern 9 angeordnet ist. Die Stege 8 und die Kerne 9 sind aus faserverstärktem Kunststoff gepresst. Der gesamte Pleuelschaft 5 wird von den Wickellagen 7 umschlossen. Bei diesem Schaftaufbau dienen die Kerne 8 zur Aufnahme der Druckbelastungen, die Gurte 6 zur Aufnahme der Zugkräfte und die Stege 8 zusammen mit der Wicklung 7 als Schubverbund zur Aufnahme der Biegebelastung des Pleuels. Der beschriebene Aufbau des Pleuelschaftes 5 ist nur als ein Beispiel für eine mögliche Ausführungsform zu werten. Es liegt im Rahmen der Erfindung, die auftretenden Kräfte und Belastungen auch mit anderen Anordnungen des Druckkerns und des Schubverbandes aufzunehmen. Als Material für die Fasern ist entsprechend den auftretenden Belastungen z.B. Glas, Kunstoff und Kohlenstoff geeignet. Bevorzugt sollen Kohlenstoffasern wegen ihrer hohen Festigkeitseigenschaften und ihres grossen Elastizitätsmoduls verwendet werden.

Die Fig. 3 zeigt die Möglichkeit der Montage und Demontage des Pleuels 1. Dazu wird der Gurt 6 beiderseits des Kurbelwellenlagers 2 schräg durchtrennt, in die Trennfuge eine Metallfolie 10 eingelegt und mittels hochwarmfestem Kleber 11 beidseitig mit dem Gurt 6 verbunden. Zur elektrischen Isolierung des Metallfolie 10 gegenüber den Teilen des Gurtes 6 kann jeweils ein dünnes Glasgewebe zwischengelegt werden. Die Montage und Demontage kann ggf., wenn kein warmfester Schnellkleber zur Verfügung steht, in einem Wärmeschrank erfolgen. Die Demontage ist ausserdem durch induktive Beheizung der Metallfolie 10 möglich.

## Patentansprüche

1. Pleuelstange für Kraftmaschinen mit einem Pleuelauge (4) und mit einem mit geteilten Lagerschalen versehenem Kurbelwellenlager (2), bei dem ein Gurt (6) aus faserverstärktem Kunststoff um das Pleuelauge und von diesem zu beiden Seiten des Pleuelschaftes in das Kurbelwellenlager geführt ist, dadurch gekennzeichnet, dass der Gurt (6) aus faserverstärktem Kunststoff auch das Kurbelwellenlager (2) ganz umschliesst und beidseitig des Kurbelwellenlagers etwa parallel zur Längsachse des Pleuelschaftes (5) schräg durchschnitten ist und die dadurch gebildeten Schäftungen mittels eines hochwarmfesten Klebers (11) verbunden sind und dass der Pleuelschaft zwischen den Gurten durch formsteife Bauteile (8, 9) aus faserverstärktem Kunststoff verstärkt ist.

2. Pleuelstange nach Anspruch 1, dadurch gekennzeichnet, dass zwischen den geschäfteten Gurtteilen (6) eine Metallfolie (10) mit eingelegt und verklebt ist.

3. Pleuelstange nach den Ansprüchen 1 und 2, dadurch gekennzeichnet, dass beiderseits der Metallfolie (10) ein dünner Glasgewebestreifen zwischengelegt ist.

4. Pleuelstange nach den Ansprüchen 1 bis 3, dadurch gekennzeichnet, dass der Pleuelschaft (5) zwischen dem Pleuelauge (4) und dem Kurbelwellenlager (2) ausgefüllt ist mit zwei U-förmigen Stegen (8) und die Stege ausfüllenden Kernen (9) aus faserverstärktem Kunststoff.

5. Pleuelstange nach den Ansprüchen 1 bis 4,

3           **0 032 162**          4

dadurch gekennzeichnet, dass der Pleuelschaft (5) zwischen dem Pleuelauge (4) und dem Kurbelwellenlager (2) mit Wickellagen (7) verstärkt ist.

6. Pleuelstange nach den Ansprüchen 1 bis 5, gekennzeichnet durch die Verwendung von Kohlenstoffasern für den faserverstärkten Kunststoff.

## Claims

1. A connecting rod for power engines, having an end hole (4) and a crankshaft bearing (2) which is provided with split bearing brasses and wherein a belt (6) made of fibre-reinforced plastic material extends around the end hole and along both sides of the connecting-rod blade to the crankshaft bearing, characterized in that the belt (6) made of fibre-reinforced plastic material completely encircles the crankshaft bearing (2) and is obliquely cut through on both sides of said crankshaft bearing approximately parallel to the longitudinal axis of the connecting-rod blade (5), and the splices thereby formed are connected by means of a highly heat-resistant adhesive (11), and in that between the belts the connecting-rod blade is reinforced by stiffening components (8, 9) made of fibre-reinforced plastic material.

2. A connecting rod in accordance with claim 1, characterized in that a metal foil (10) is also inserted and glued between the spliced belt parts (6).

3. A connecting rod in accordance with claims 1 and 2, characterized in that a thin strip of glass cloth is interposed on both sides of the metal foil (10).

4. A connecting rod in accordance with claims 1 to 3, characterized in that between the end hole (4) and the crankshaft bearing (2) the connecting-rod blade (5) is filled up with two U-shaped webs (8) and with cores (9) which fill up the webs, both of which are made of fibre-reinforced plastic material.

5. A connecting rod in accordance with claims 1 to 4, characterized in that between the end hole (4) and the crankshaft bearing (2) the connecting-rod blade (5) is reinforced by winding layers (7).

6. A connecting rod in accordance with claims 1 to 5, characterized by the use of carbon fibres for the fibre-reinforced plastic material.

## Revendications

1. Bielle pour machines motrices, comportant un œil (4) de pied de bielle et un palier (2) de tête de bielle muni d'un coussinet en plusieurs parties, dans laquelle une ceinture (6) en matière plastique renforcée de fibres est enroulée autour de l'œil de pied de bielle puis, à partir de celui-ci, passe des deux côtés du corps de bielle pour gagner le palier de la tête de bielle, caractérisée par le fait que la ceinture (6) en matière plastique renforcée de fibres entoure aussi complètement le palier (2) de la tête de bielle et est découpée obliquement des deux côtés de celui-ci à peu près parallèlement à l'axe longitudinal du corps de bielle, que les joints biseautés ainsi formés sont raccordés au moyen d'un adhésif (11) résistant aux hautes températures, et que le corps de la bielle entre les ceintures est renforcé par des éléments de construction (8, 9) de forme rigide en matière plastique renforcée de fibres.

2. Bielle selon la revendication 1, caractérisée par le fait qu'une feuille métallique (10) est insérée et collée entre les parties biseautées de la ceinture (6).

3. Bielle selon les revendications 1 et 2, caractérisée par le fait qu'une mince bande de tissu de verre est appliquée des deux côtés de la feuille métallique (10).

4. Bielle selon les revendications 1 à 3, caractérisée par le fait que le corps de bielle (5) entre l'œil (4) de pied de bielle et le palier (2) de tête de bielle renferme deux armatures (8) en forme de U et des noyaux (9) en matière plastique renforcée de fibres remplissant les armatures.

5. Bielle selon les revendications 1 à 4, caractérisée par le fait que le corps de bielle (5) entre l'œil (4) de pied de bielle et le palier (2) de tête de bielle est renforcé par des couches d'enroulement (7).

6. Bielle selon les revendications 1 à 5, caractérisée par l'emploi de fibres de carbone pour la matière plastique renforcée de fibres.

3

Fig. 1

Fig. 2

Fig. 3

5